# EUROPEAN PATENT SPECIFICATION

(11) **EP 1 723 059 B1**
(45) Date of publication and mention of the grant of the patent: **29.08.2007**
(21) Application number: 05702491.1
(22) Date of filing: 12.02.2005
(51) Int. Cl.: B65G 35/06, B65G 17/20, E01B 25/22, B65G 17/00, B65G 17/42, B65G 19/02, E01B 25/26

(54) **OVERHEAD CONVEYER SYSTEM WITH MOTORIZED AERIAL TRANSPORTER AND TWIN RAIL**
HÄNGEFÖRDERSYSTEM MIT MOTORISIERTEM HÄNGEBAHNTRANSPORTER UND DOPPELSCHIENE
AUTOMATE AERIEN MOTORISE POUR CHARGE FAIBLE SUSPENDUE A RAIL DOUBLE

(30) Priority: 13.02.2004 IT TO20040078
(43) Date of publication of application: 22.11.2006
(73) Proprietor: Solimano, Alessandro, 38068 Rovereto (IT)
(72) Inventor: Solimano, Alessandro, 38068 Rovereto (IT)
(74) Representative: Spera, Maria Caterina
(86) International application number: PCT/IB2005/000364
(87) International publication number: WO 2005/080235

(56) References cited:
- EP-A- 0 713 834
- DE-A1- 2 315 453
- GB-A- 1 237 552
- US-A- 2 840 006
- US-A- 3 064 586
- US-A- 5 927 367
- PATENT ABSTRACTS OF JAPAN vol. 018, no. 027 (M-1543), 17 January 1994 (1994-01-17) & JP 05 262416 A (MITSUBISHI HEAVY IND LTD; others: 01), 12 October 1993 (1993-10-12)

## Description

The present invention concerns a bi-rail motorised air transporter for hung light loads and the like. With the expression "hung light loads" we mean to designate hung bodies with a weight, for example, of about 50 kg.

Bi-rail motorised air transporters for hung light loads and the like are known and comprise, in general:
- a first suspended guide or rail, which, on the inside, provides a first runway with its path substantially closed on the three sides: on top and on the sides, for a jack chain, moved by a motor group, circulating continuously in a closed loop and carrying fixed haulage hooks, spaced apart by a predetermined pitch and extending partially below the guide itself, through a corresponding continuous longitudinal slot;
- a second guide or rail, for example cylindrical tubular, suspended below the first through a plurality of hanging arms, fixed laterally to the first guide, and which provides a second runway with its path substantially open, which progresses following the first runway;
- a plurality of trolleys, each essentially comprising at least two idle rollers or wheels, with substantially horizontal axes, one for each end of the trolley and placed in rolling contact on the second guide, as well as a longitudinal suspension rod for hung objects to be transported, below the second guide and connected to its respective longitudinal ends with the axes of said rollers through corresponding hanging side arms. The document JP-A-05 262 416 discloses a motorised air transporter according to the preamble of claim 1.

When a haulage hook, fixed to the jack chain that runs continuously along the first runway, it meets a trolley parked on the second runway, automatically hooks it and hauls it along the second runway itself, up to an unloading station, in which the trolley is released from the haulage hook and, through suitable switch means, is made to leave the runway itself and is diverted onto another path, where it is moved manually by sliding.

Regarding this, it should be noted that known transporters of the type specified are provided with switch devices of the type with an oscillating needle, for example pneumatically controlled.

However, such known transporters have some serious drawbacks, amongst which the following should be noted:
- they have a substantial bulk and involve relatively complex processing to make them;
- since each trolley has the support arms of the suspension rod hanging to the right or left hand side of its runway, it can only cross the runway according to a given "way" or direction, to the left or to the right;
- the trolleys, during travel, can easily disengage and "derail" with respect to their runway with open path, since they are only rested by gravity on the corresponding guide and are not guided any further.
   Conventionally, in order to make up for this drawback, some additional containment guides are inserted along the passage;
- the trolleys, when they are equipped with means for hooking to each other and they are introduced onto the runway hooked together in a "train" formation, they are not easy to separate apart or to "singularise", as is required for the haulage operations through the hooks of the haulage chain;
- since the trolleys cross a runway with its path open and not protected, the employed operators of the transporter are exposed to risks of accidents, even serious ones (like, for example, sheared hands);
- the haulage hooks provided in the jack chain are always exposed at the bottom to the rail containing the chain itself, creating bulk and danger for the operators (accidental insertion of hands) or other.

The present invention, stemming from the notion of such drawbacks, intends to overcome them.

Therefore, a purpose of the present invention is that of providing a bi-rail motorised air transporter for hung light loads and the like, that has a compact, simplified structure, that is easy to make and small in size and bulk.
Another purpose of the invention is that of providing a motorised air transporter as specified, in which the trolleys do not travel just to the right or left like current ones, but can cross their runway both travelling to the right and to the left.
A further purpose of the invention is that of providing a motorised air transporter as indicated, in which the trolleys are safe against the risk of derailing whilst they travel.

Yet another purpose of the invention is that of providing a motorised air transporter as stated, in which the trolleys, inserted through switches, coming from passages on rails with manual traction and consisting of a "train" formation, which allows them to be pushed or hauled, can subsequently be "singularised " in a simple and automatic way going in and out with respect to the transporter itself.
Yet another purpose of the invention is that of providing a motorised air transporter as defined, in which the switch device is made with simple and precise parts, has a low bulk, has the possibility of two-sided application with respect to the sliding path of the trolleys (therefore possibility of the trolleys entering/exiting both on the right and on the left of the path), is safe, easy to assemble, does not require adjustments in operation and is practically exempt from maintenance.
A further purpose of the invention is that of providing a motorised air transporter as specified, in which the operators are protected against the risks of accidents caused by the upper part of the trolleys containing the wheels that, in known transporters, crossing the runway, creates the possibility of shearing.
Another purpose of the invention is that of providing a motorised air transporter as stated, in which the haulage hooks of the jack chain do not create danger and can, if needed, take up a withdrawn position with respect to the chain itself, making it possible to automatically release the trolley when it meets another trolley sitting still on the same path.

In view of such purposes, the present invention provides a bi-rail motorised air transporter for hung light loads and the like, the essential characteristic of which forms the object of the main claim.
Further advantageous characteristics of the transporter according to the invention are described in the dependent claims.
The aforementioned claims are shown here in full.

The present invention shall become clearer from the following detailed description, with reference to the attached drawings, provided as an example, in which:
- fig. 1 is a partial side elevated view of the transporter according to an example embodiment of the invention;
- fig. 2 is a cross section view thereof, with increased scale, according to the line I-I of fig. 1;
- figures 3.1. and 3.2. are detailed views, with increased scale, of a part of a continuous chain with which the transporter of fig. 1 is provided, respectively from above and in a side elevation, with parts in section;
- figures 4.1 and 4.2 are detailed views of the transporter of fig. 1, but with increased scale and respectively of an ascending ramp part and of a descending ramp part of the transporter itself;
- fig. 5 is a side elevation view with increased scale of a trolley mobile along the transporter of fig. 1, but illustrated off line;
- fig. 6 is a view of a trolley similar to that of fig. 5, in which, however, two haulage hooks of the chain of said transporter (not illustrated), are also schematically illustrated respectively in two distinct operating positions with respect to the trolley;
- figures 7.1 to 7.6 are views similar to that of fig. 1, but in a different scale and schematically illustrating respective operating positions of a haulage hook of the chain of the transporter with respect to two adjacent trolleys;
- fig. 8 is a schematic plan view from above, with increased scale, of a double switch of the transporter of fig. 1;
- figures 9 and 10 are side views, respectively in the direction of the arrows IX - and X of fig. 8;
- figures 11 and 12 are detailed views, with increased scale, respectively of the detail XI of fig. 9 and of the detail XII of fig. 10;
- figures 13 and 14 are cross section views, respectively according to the line XIII-XIII of fig. 12 and the line XIV-XIV of fig. 11;
- figures 15 and 16 are section views, with increased scale, respectively according to the lines XV-XV and XVI-XVI of fig. 8;
- figures 17.1 to 17.7 are views very similar to that of fig. 1, but in a different scale and schematically illustrating respective operating positions of many trolleys, starting from a train formation of trolleys, during the separation or singularisation steps of each trolley (in such views the separation means of the trolleys being illustrated in section);
- fig. 18 is a cross section view, with increased scale, according to the line XVIII-XVIII of fig. 17.1;
- fig. 19 is a cross section view, with increased scale, according to the line XIX-XIX of fig. 17.2;
- fig. 20 is a side view similar to that of figures 17.1 to 17.7, but illustrating with increased scale just one trolley hauled up to separation means of the trolleys.

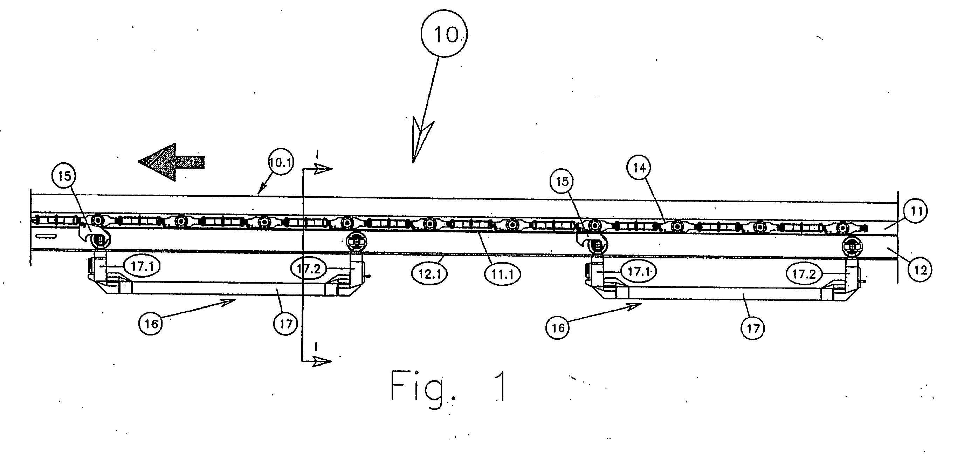

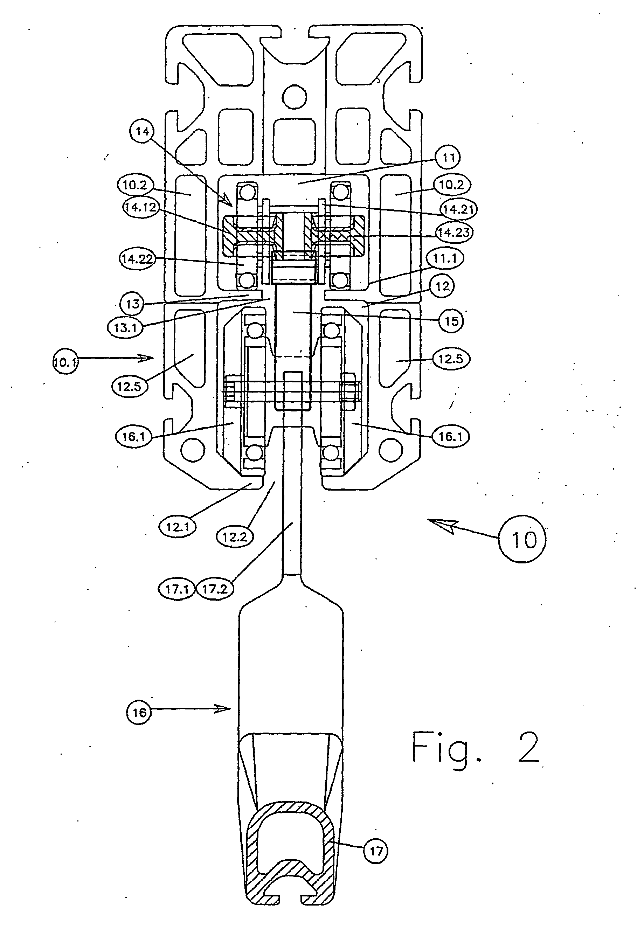

Firstly with reference to figures 1 and 2 of the attached drawings, the bi-rail motorised air transporter for hung light loads and the like, according to an example embodiment of the invention, is wholly indicated with 10.
Said transporter 10 essentially comprises a suspended rigid linear body consisting of a drawn product 10.1, for example extruded in light alloy, the cross section of which has an essentially rectangular outline. In said extruded product 10.1 two main overlapping continuous longitudinal recesses, upper 11 and lower 12, are provided, whereas an intermediate horizontal wall 13 separates said two overlapping recesses 11, 12 and has a continuous longitudinal central slot 13.1 through which the recesses themselves are arranged in free communication. Moreover, the lower wall that defines the underlying recess 12 at the bottom also has a continuous longitudinal central slot 12.2.
Moreover, in said profile 10.1:
- said upper recess 11 provides a first guide or rail, forming a first runway 11.1 with its path substantially closed on the three sides: on top and on the sides, for a continuous jack chain 14, circulating continuously and carrying a plurality of articulated haulage hooks, spaced apart by a predetermined pitch and normally extending partially below said first runway 11.1 through said slot 13.1;
- said lower recess 12 provides a second guide or rail, forming a second runway 12.1 with its path substantially closed on its two sides and partially on the top side and on the bottom side (forming two opposite "C" shapes), which extends below and following said first runway 11.1 and in which the haulage hooks 15 are normally at least partially arranged.

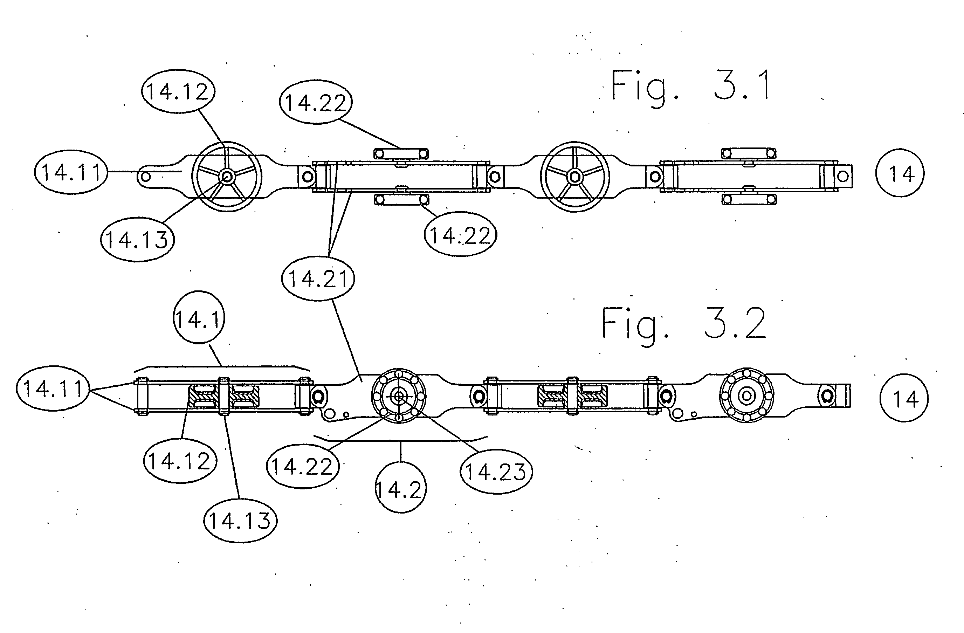

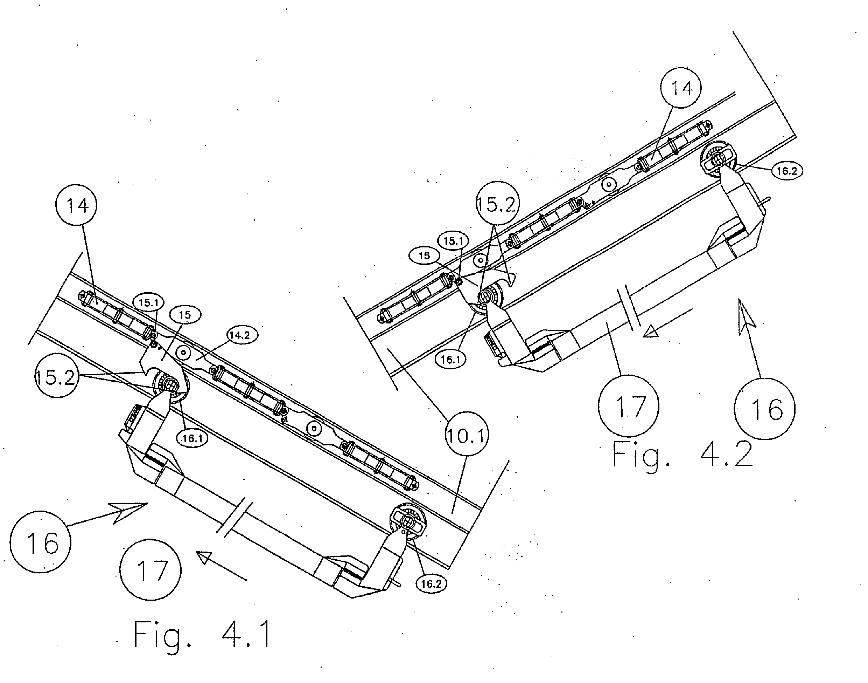

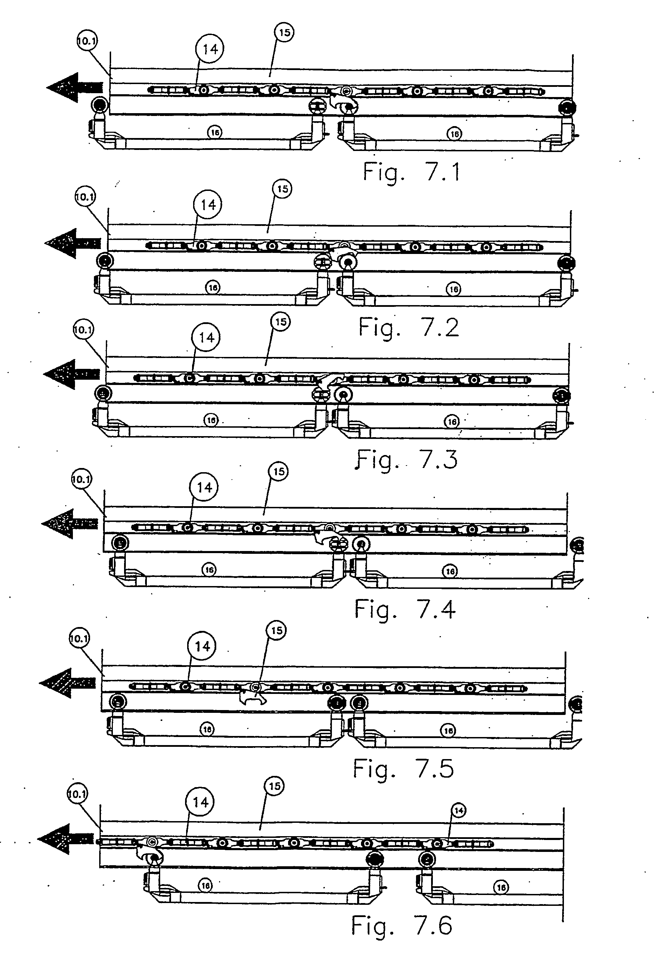

Also with reference to figures 3.1, 3.2, in said chain 14 there are alternating links 14.1, formed from two opposite platelets 14.11 between which an idle roller (known as "directional") 14.12 with axis 14.13, is supported, contained in an essentially median vertical longitudinal plane with respect to the runway 11.1, and links 14.2, formed from two opposite platelets 14.21 outside of which two idle rollers (known as "bearers") 14.22 are respectively supported, mounted with respect to a common axis 14.23 essentially transversal with respect to the runway 11.1. As can be seen for example in figures 2, 4.1, 4.2, in some of the links 14.2, between the opposite platelets 14.21, a respective haulage hook 15 is supported, articulated at its front end (according to the direction of advancement along the runway 11.1) with respect to a pin 15.1, with an axis parallel to the axis 14.23 of the bearer rollers and fixed with respect to the front end of said platelets 14.21, so that said hook 15 can oscillate between a position hanging downwards by gravity (fig. 1, 7.1, 7.5), in which it at least partially extends in said second runway 12.1, and a position oscillating towards the other about the pin 15.1 and partially withdrawn in the bulk dimension of the respective links 14.2 (figs. 7.2, 7.3, 7.4).
Said haulage hook 15 is substantially flat and is shaped, in its lower part that normally extends in the second runway 12.1, forking in an upside-down "U" shape 15.2 (figs. 4.1, 4.2), essentially arranged in the median vertical longitudinal plane of the two overlapping runways 11.1 and 12.1. Said fork 15.2 has two end fingers spaced apart and joined with respect to an intermediate rectilinear portion through respective mutually opposite curvilinear portions.
Motor reducer means (per sé known and not illustrated) make the jack chain 14 circulate with continuity along said first runway 11.1. A plurality of trolleys 16 are provided capable of sliding along said second runway 12.1.

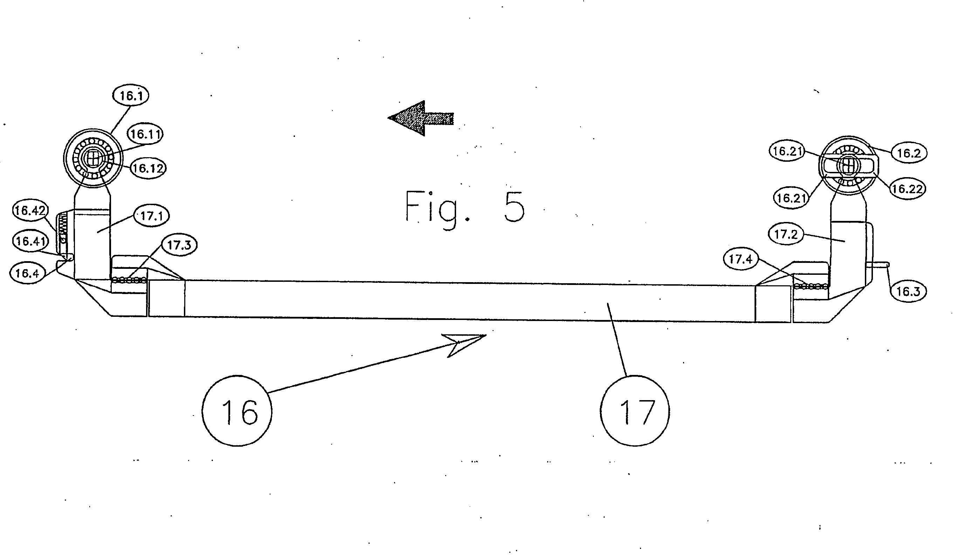

Each trolley 16 essentially comprises (figs. 2, 5):
- at one end, known as the front (according to the advancing direction along the runway 12.1), a pair of front idle rollers or wheels 16.1, mounted coaxial on a common axis 16.11, parallel to the axis of the pin 15.1 of the hooks 15 and coated with a substantially cylindrical sheath 16.12, for example made from plastic material, to cooperate with any haulage hook 15, when it carries out its hooking and haulage action of the trolley, as shall become clearer hereafter; said arrangement forms the front axle;
- at the other end, known as the rear (according to the advancing direction along the runway 12.1), a pair of rear idle roller or wheels 16.2, mounted coaxial on a common axis 16.21, parallel to the axis 15.1 of the pins 15 and coated with an essentially parallelepiped block 16.22, for example made from plastic material; said arrangement forms the rear axle;
- said rollers 16.1, 16. 2 are arranged in rolling contact in said second runway 12.1;
- as well as a longitudinal suspension rod 17 of objects to be transported, connected at its respective longitudinal ends with said axles of the pairs of rollers 16.1, 16.2 through corresponding hanging arms 17.1, 17.2 suspended centrally with respect to the pairs of rollers themselves (or rather arranged substantially in said median vertical longitudinal plane of the runways 11.1 and 12.1). Said hanging arms 17.1, 17.2 extend at the bottom through the continuous longitudinal slot 12.2 and support the corresponding suspension rod 17 below the lower wall of the extruded product 10.1 (figs. 1, 2), or rather outside and below the second runway 12.1 and in a central position (or rather at said median vertical longitudinal plane).

It should be noted that each hanging arm 17.1, 17.2 is connected at the corresponding end of the longitudinal suspension rod 17 of each trolley 16 with the intermediary of a respective fifth wheel 17.3, 17.4 with its axis parallel to the axis 14.13 of the directional rollers 14.12 of the chain 14, to allow the trolley itself to follow the curves of the runway 12.1 substantially extending in a horizontal plane.

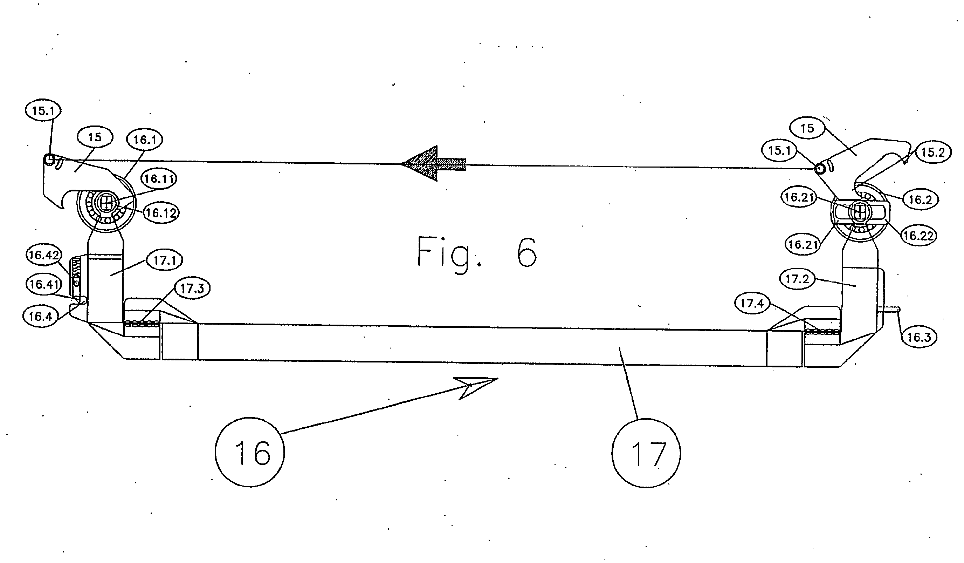

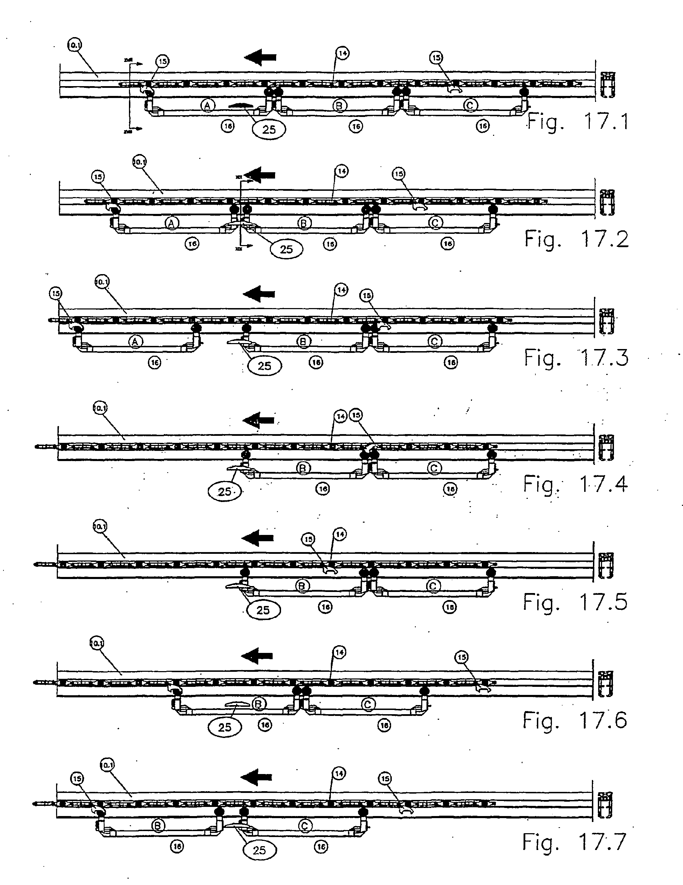

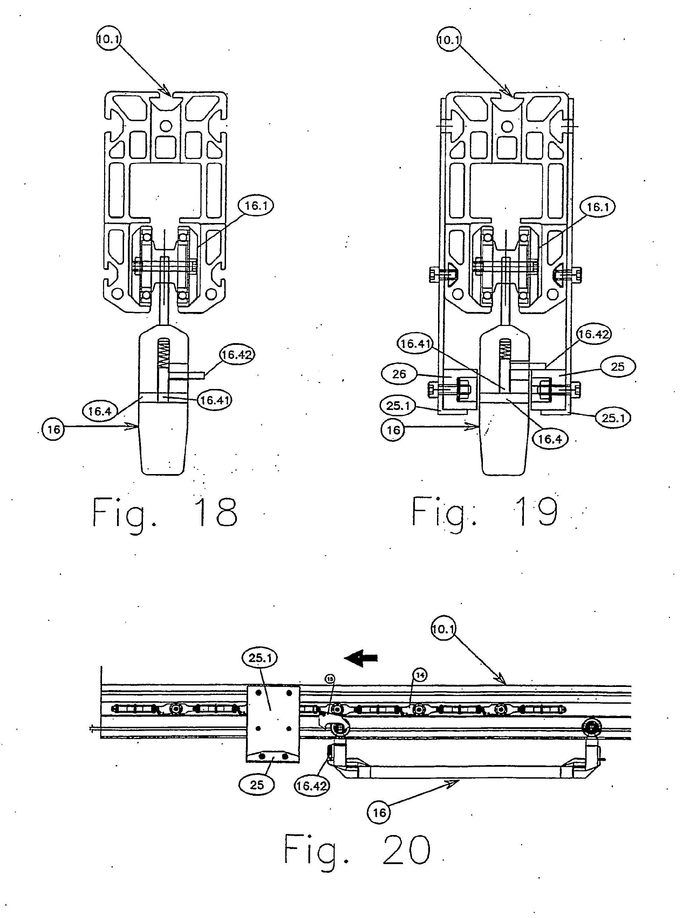

It should also be noted that (as illustrated in fig. 6, in which the relative position of a hook 15 of the chain 14, not illustrated in such a figure, with respect to the two axles of a trolley 16, is schematised for explicative purposes) the width of the block 16.22 (measured according to the advancing direction of the trolleys 16) is greater than the size of the opening of the fork 15.2 between its end fingers. As can be seen from the sequence according to figures 7.1 to 7.6, said block 16.22 carries out the functions (according to a known system called "power and free" for the formation of an accumulation of trolleys in line): (I) of causing the retrograde upward oscillation about the axis 15.1 of an arriving haulage hook 15, not allowing it to hook on, at the rear axle, to the trolley 16 parked on the runway 12.1, and
(II) of disengaging the hook 15, which hauls - engaging the front axle thereof from above - a following trolley 16 since, when said hook 15 hits the block 16.22 of the trolley that precedes it, the hook detaches itself (oscillating in a retrograde manner upwards about its axis 15.1) from the front axle of the trolley being hauled, as well as
(III) of preventing any hook 15 of the chain 14 from hooking one of the axles of any one of the trolleys of a train of trolleys 16 connected together in line in said second runway 12.1, with the exception of the front axle of the first trolley of such a train (as will become clearer from what follows).
It should be noted that in fig. 4.1 a rising portion of the transporter 10 is illustrated, whereas in fig. 4.2 a descending portion of the same transporter is illustrated. In said figures the different relative positions between the front axle of a trolley 16 and the relative haulage hook 15 can be seen. Said hook 15 engages the sheath 16.12 of the front axle of a trolley 16 with its rear curvilinear portion in an ordinary haulage situation (that is, along a horizontal or rising portion of the runway 12.1), whereas it engages said sheath 16.12 of the front axle of the trolley 16 with its front curvilinear portion in the descending portions of the runway 12.1.
Each trolley 16 also has a rear haulage hook 16.3 (figs. 5, 6), arranged according to a plane essentially parallel to the axes of the rollers 16.1, 16.2 of the trolley, and a front fastening eyelet 16.4 (figs. 5, 6, 18, 19), provided with a stop pawl 16.41 that is electrically retractable and extendable relative to said eyelet with movement in a direction essentially perpendicular with respect to the plane of said haulage hook 16.3, for hooking together a pair of adjacent trolleys (16) in line, when said pawl, under the action of corresponding elastic means, extends in said eyelet, which receives said hook 16.3 inside it. The pawl 16.41 is equipped with a fixed side pin 16.42 projecting transversally with respect to the runway 12.1 and that, when made to carry out a movement from the bottom towards the top, causes - in a pair of trolleys 16 hooked together - the disengagement of the pawl itself from the hook 16.3 of the trolley that precedes it (against the force of said elastic means), determining the unhooking of the trolley 16 in front, if this is hauled by a hook 15 of the chain 14. The actuation of said pin 16.42 of the pawl 16.41 for unhooking can take place by means of an actuator (per sé known and not illustrated), pneumatically controlled and mounted fixed externally and laterally to the extruded body 10.1 of the transporter 10. Or else, according to the embodiment illustrated in figures 17.1 to 17.7, 18, 19, and 20, the actuation of said pin 16.42 of the pawl 16.41 to unhook a front hauling trolley 16 from another rear hauled trolley 16, is determined through separation means 25, provided fixed along said second runway 12.1. Said separation means 25 comprise, in particular, an essentially L-shaped rod 25.1 fixed with a branch thereof that is vertical with respect to the linear body 10.1 of the transporter (fig. 19) and supporting canti-levered an essentially horizontal plate 25, which partially projects (in any case so as not to interfere with the trolleys 16 in transit) into said second runway 12.1 and has two contiguous ramps on its upper face: a rising first ramp (according to the direction of travel of the trolleys 16 along said runway 12.1) and a descending second ramp, such ramps being provided to cooperate with said pin 16.42 of the pawl 16.41 of each trolley 16.
A counterplate 26 is supported fixed in position opposite and at a distance (so as not to interfere with the trolleys 16 in transit) with respect to the plate 25, to guide the trolleys 16 during their separation, avoiding the derailment thereof.

In particular, in figures 17.1, 17.2 three trolleys 16 are represented crossing a portion of said runway 12.1 hooked together in sequence in pairs, so as to take up a train formation, in which the trolleys 16 themselves are designated A, B and C respectively, according to the order of travel (trolley A being the first and C being the last). Such a train of trolleys is hauled through a haulage hook 15 that engages the front axle 16.11 of the first trolley A. Along said portion of the runway 12.1 said separation means 25 are provided, in an arrangement such as to make a sliding engagement from below with the pin 16.42 of the pawl 16.41 of each trolley 16 in transit. With reference to fig. 17.3, when the rising ramp of the plate of the separator means 25 slidably engages from below the pin 16.42 of the pawl 16.41 of the second trolley B of the train of trolleys, lifting the pin itself upwards, said pawl is integrally made to withdraw - against the force of the elastic means that normally force it downwards in totally extracted position - and then slides away from the rear haulage hook 16.3 of the first trolley A. The first trolley then continues its journey hauled by the hook 15 along the runway 12.1, whereas the two trolleys B and C stop and park on the runway itself, no longer hauled.

In figures 17.3 to 17.6 the relative displacement of the subsequent haulage hook 15 with respect to said trolleys B, C that are still is illustrated. Such a hook 15, after having passed the block 16.22 of the rear axle of the third trolley C, meets, with the front finger of its fork, the sheath 16.12 of the front axle 16.11 of the last trolley C (fig. 17.3) and, oscillating with retrograde motion upwards about the pin 15.1, climbs over the axle itself without engaging it (fig. 17.4), since it then meets the block 16.22 of the rear axle of the second trolley B, which does not allow the hook 15 to oscillate downwards in work position, thus preventing it from also hooking said rear axle. The hook 15 continues its journey (fig. 17.5) until it comes into contact, arranging itself straddling and hooking the front axle of said second trolley B, which is thus hauled by the hook itself together with the third trolley C along the runway 12.1 (fig. 17.6). At the exit from the separator means (fig. 17.4), the pin 16.42 of the pawl 16.41 of the second trolley B slides across the descending ramp of the plate 25, descending towards the bottom and allowing the pawl 16.41 to return integrally to it in totally extracted position under the action of said elastic means.

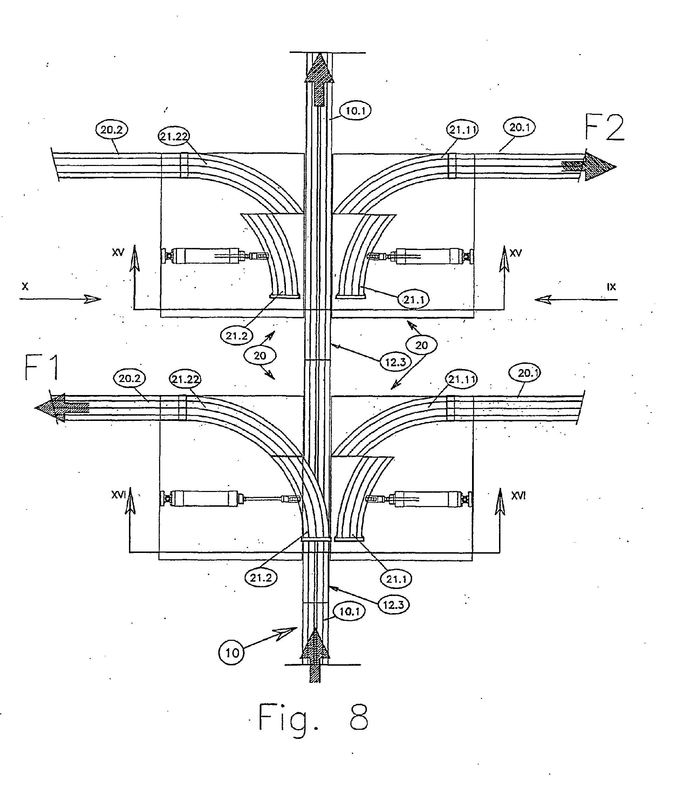

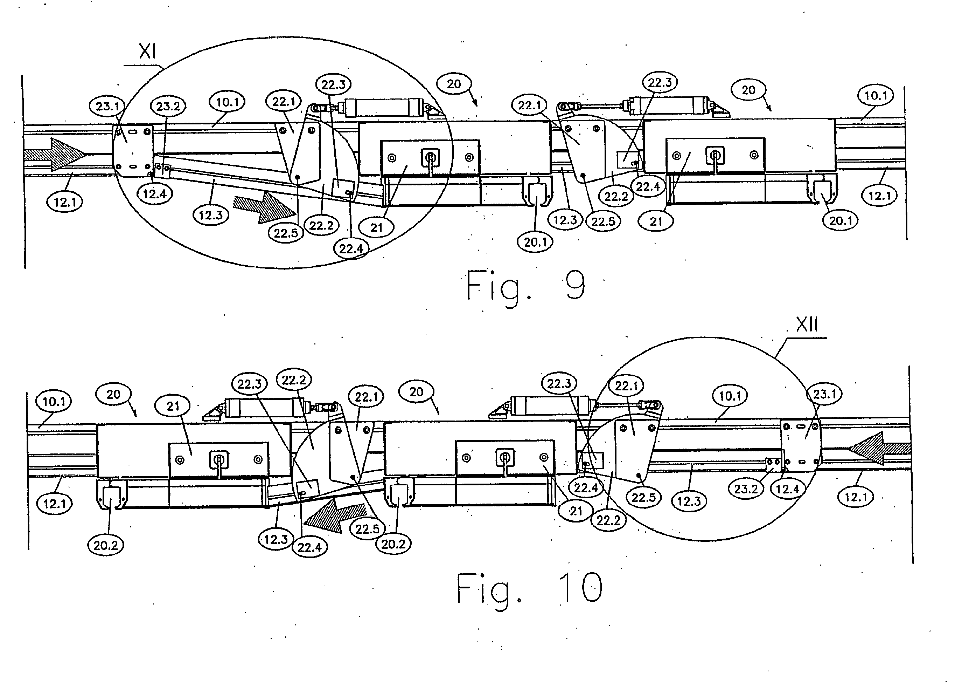

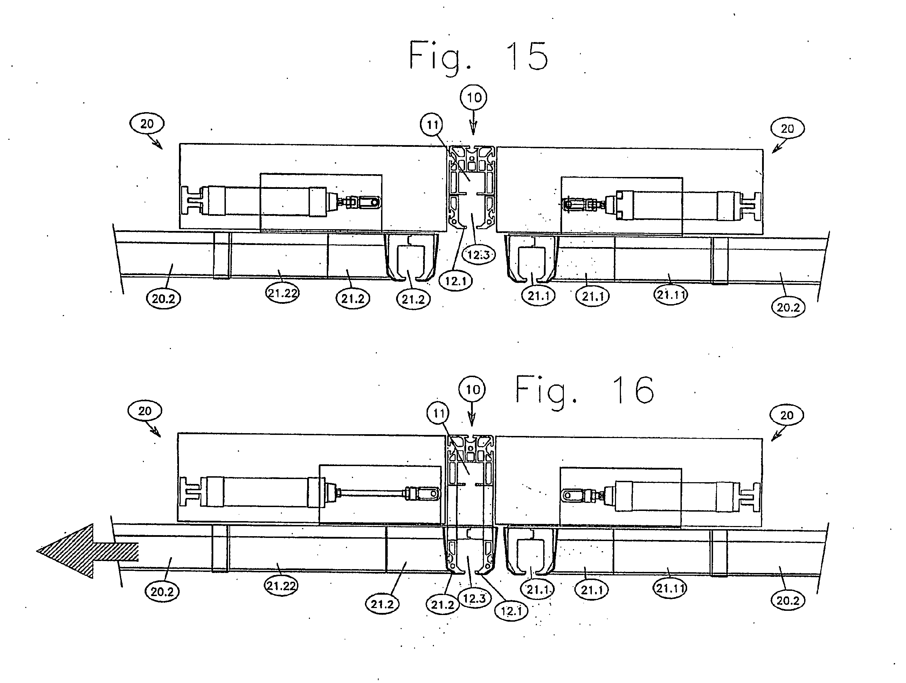

Then, when the rising ramp of the separator means 25 slidably engages from below the pin 16.42 of the pawl 16.41 of the third hauled trolley C, the operating sequence described above is repeated and the trolley B unhooks from the trolley C and continues on its journey hauled by the hook 15 along the runway 12.1, whereas the third trolley C stops and parks on the runway itself until a subsequent hook 15 engages its front axle 16.11 hauling it away. Figures 8 to 16 schematically illustrate, in plan from above (fig. 8), in side elevation (figs. 9 - 12) and in section (figs. 13 - 16), a part of the transporter 10, having a rectilinear runway portion 12.3 of the second runway 12.1 arranged upstream (according to the direction of sliding of the trolleys 16) of a double switch 20, for the selective channelling of the arriving trolleys 16 or towards an underneath outer right path 20.1 or towards an underneath outer left path 20.2, as well as for the possible continuation of the travel along the transporter 10 itself. (In fig. 8, the first switch 20 is switched to allow the trolleys to exit on an underlying left path, whereas the subsequent switch 20 is arranged in "neutral" position, i.e. it allows the trolleys to continue along the runway 12.1). Along said paths 20.1, 20.2 the trolleys 16 are made to slide manually and in such a sense hereafter they are called "manual conveyors".

Said rectilinear portion 12.3 of the second path 12.1 is connected in an articulated manner with its distal end of the manual conveyors 20.1, 20.2 with respect to the lower wall of the extruded product 10.1 to oscillate about an essentially horizontal axis 12.4, so as to be able to selectively arrange the other end thereof (oscillating downwards about said axis) substantially at the level of said underlying manual conveyors (work position, in which the trolleys 16 are sent towards one of said manual conveyors), and so as to be able to selectively return (oscillating upwards about said axis) into the original position, in which it joins linearly to said second runway 12.1 of the linear body 10.1 (rest position, in which the trolleys 16 continue along the runway 12.1).

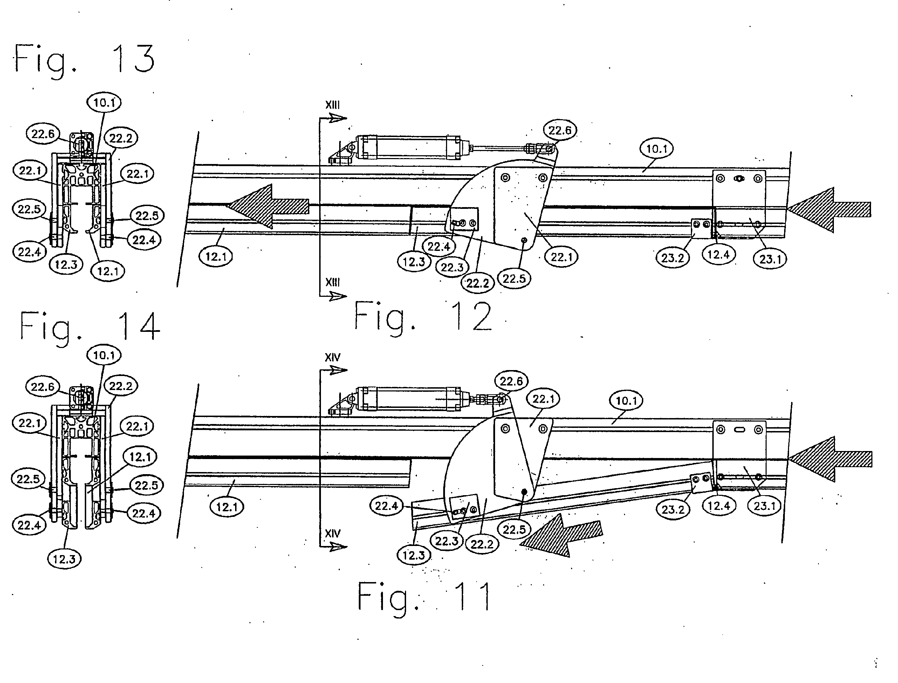

At the exit of said rectilinear portion 12.3 of the transporter 10, at the level of the manual conveyors 20.1, 20.2, a drawer-type switch 21 (figs. 9, 10) is provided, which comprises two contiguous curvilinear flat runway portions, respectively right 21.1 and left 21.2, arranged substantially one to the right and the other to the left of the overlying transporter 10, both in the same area of its linear body 10.1, so that in such an area each trolley 16 can go out from said second runway 12.1 both towards the right and towards the left.

Moreover, said drawer-type switch 21 is selectively mobile in the direction transversal to the runway 12.1 of the transporter 10, in the plane of the manual conveyors 20.1, 20.2, so as to selectively arrange one or the other of the two curvilinear portions 21.1, 21.2 with an end at the second runway 12.1 / 12.3 itself and with the other end contiguous to a respective fixed curvilinear portion, right 21.11 or left 21.22, initial and joining with respect to the corresponding manual conveyor 20.1, 20.2, right or left, respectively. The curvature of each curvilinear portion 21.1, 21.2 of the switch 20 and of the respective fixed joining curvilinear portions 21.11, 21.22 is such as to join without solution of continuity, in the plane of said manual conveyors, the end of the second runway 12.1 / 12.3 distal from the axis 12.4 with the start of the respective manual conveyor 20.1, 20.2, when said rectilinear portion 12.3 of the transporter 10 is oscillated in said work position.

As indicated with arrows F1 and F2, the drawer-type switch 21 allows the trolleys 16 to go out from the second runway 12.1 selectively towards the right (manual conveyor 20.1) or towards the left (manual conveyor 20.2). During such an operation, the trolley 16 involved crosses the inclined plane formed by the rectilinear portion 12.3 of the second runway 12.1 oscillated in work position about the axis 12.4, allowing its front axle to detach automatically (by moving away) from the haulage hook 15 of the jack chain 14 that hauled it up to such a position. Consequently, along said inclined plane the trolley 16, detached from the hook 15, acquires speed by gravity from its own weight and freely crosses the remaining part of the inclined rectilinear portion 12.3, correctly and automatically entering the corresponding manual conveyor 20.1, 20.2 by means of the corresponding curvilinear portion 21.1, 21.2 of the drawer-type switch 21, suitably actuated, and by the relative fixed joining curvilinear portion 21.11, 21.22. Moreover, the switch 21 allows the journey of the trolleys 16 along the runway 12.1 to continue in its "neutral" position.

In said drawer-type switch 21, each curvilinear portion 21.1, 21.2 is formed from a corresponding light alloy fusion and is arranged so that it can slide on corresponding rectilinear guides (per sé known and not illustrated) and is selectively actuated to slide with respect to said guides through translation command means with mechanical or fluid-dynamic type actuation (hydraulic or pneumatic means), per sé known, illustrated in the drawing and not described any further.

Moreover, the selective oscillation between the rest position and the work position, and vice-versa, of the rectilinear portion 12.3 of the second runway 12.1 about the axis 12.4 is also controlled through fluid-dynamic type command means (per sé known, illustrated in the drawing and not described any further) or mechanical command means. Regarding this, it should be noted that in the extruded product 10.1 of the transporter 10 on the side of the first 11.1 and second 12.1 runways some corresponding continuous longitudinal ducts, 10.2 and 12.5 respectively (fig. 2) are formed in an integral body for supplying pressurized fluid, for example, to said command means of the oscillation of the rectilinear portion 12.3 of the second runway 12.1.

The articulated connection means for the oscillation about the axis 12.4 of the rectilinear portion 12.3 of the second path 12.1, between the rest position and the work position, and vice-versa, are illustrated in detail, in particular, in figures 9 to 14, where they are designated with reference numerals 22.1, 22.2, 22.3, 22.4, 22.5, 22.6, 23.1, 23.2.

Although the double drawer-type switch 21, which comprises two curvilinear runway portions, right 21.1 and left 21.2 respectively, has been illustrated here, it is obviously possible to provide a simple drawer-type switch (not illustrated), comprising a single curvilinear runway portion, right or left, when just one possibility of exit, right or left, of a trolley 16 is sufficient, as an alternative to continuing the linear journey along the second runway 12.1.

For the automatic exit of a singularised trolley, which does not fall within the scope of the present invention, individual recognition means (per sé known and not illustrated), for example of the barcode type, or else a so-called "tag system" can be arranged on each trolley, which associated with centralised control means (computer) and with local recognition means (barcode readers, antennas), provided at the switches, allow the exit of the trolley to be programmed and commanded through selective activation of the suitable switch.

It goes without saying that the operation of the drawer-type switch 21 in cooperation with the oscillating rectilinear portion 12.3 of the second runway 12.1 is reversible, or rather can be used - with inverse operation - as well as for the exit of the trolleys 16 from the second runway 12.1 towards one of the manual conveyors 20.1, 20.2, also for the manual introduction of the trolleys 16 from anyone of said manual conveyors into the second runway 12.1 of the transporter 10.

It should be noted in such a case that, since each trolley 16 is introduced with rising motion towards the top in the runway 12.1, above which the hooks 15 slide, the trolley itself cannot laterally strike the hook 15 that arrives to hook it and haul it, and consequently neither can the trolley be derailed (as, however, occurs in known transporters), but it automatically engages the hook itself - which freely oscillates about the pin 15.1 - in correct work position.

Moreover, it is possible to introduce into the second runway 12.1 of the transporter 10 even a plurality of trolleys 16, hooked together in a train and coming from any manual conveyor 20.1, 20.2. The first trolley 16 of the train is automatically hooked by the first arriving haulage hook 15 and then hauled together with the others along the runway 12.1. Then, the trolleys 16 can be separated automatically, for example at the separation means 25 described above, and then travel singularised, so that each trolley can be sent, automatically, to its destination.

The transporter 10 according to the invention allows all of the purposes specified above to be accomplished.

Below is a list of some of the main advantages of the transporter 10 according to the invention:
- reduced bulk, in particular in height, also thanks to the shape and oscillating arrangement of the hooks of the haulage chain, which can oscillate and retract in part inside the bulk shape of the chain itself;
- each trolley can cross its runway to the right or to the left equally well;
- the characteristic bi-rail structure, in which the runways of the chain and of the trolleys are foreseen, safely avoids derailing thereof as they travel;
- the automatic separation and singularisation means of the trolleys, going in and out, substantially improve the efficiency of the transporter;
- the structure of the switches allows both a right hand exit and a left hand exit to be foreseen in the same area of the transporter and each trolley can, therefore, exit in the two directions in the same point of the transporter;
- safety is substantially increased, so as to fully satisfy the prevailing standards, thanks to the bi-rail structure of the rigid linear body of the transporter made, for example, as a closed extruded aluminium profile, in which the trolleys are enclosed while travelling and the hooks of the haulage chain in circulation.

## Claims

1. Bi-rail motorised air transporter for hung light loads and the like, comprising a continuous jack chain (14) and a suspended linear rigid body (10.1), in which two main overlapping continuous longitudinal recesses, upper (11) and lower (12), are provided, wherein an intermediate wall (13) separates said two overlapping recesses and has a continuous longitudinal central slot (13.1) through which the recesses themselves are arranged in communication, and a lower wall defines the underlying recess (12) at the bottom and has a continuous longitudinal slot (12.2), so that in said body (10.1):
- said upper recess (11) provides a first guide, forming a first runway (11.1) with its path substantially closed on the three sides, on top and on the sides, for the continuous jack chain (14), circulating continuously and carrying haulage hooks (15), normally extending at least partially below said first runway (11.1) through said slot (13.1) of the intermediate wall (13);
- said lower recess (12) provides a second guide, forming a second runway (12.1) with its path substantially closed on its two sides and partially on the top side and on the bottom side, which extends below and following said first runway (11.1) and in which said haulage hooks (15) are normally at least partially arranged to haul trolleys (16), able to slide along said second runway (12.1), **characterised in that**
said continuous jack chain (14) comprises alternating first links (14.1), in each of which an idle roller (14.12) - known as "directional" - is supported with its axis (14.13) contained in an essentially median vertical longitudinal plane with respect to said first runway (11.1), and second links (14.2) in each of which two idle rollers (14.22) - known as "bearers" - are respectively supported, mounted with respect to a common axis (14.23) essentially transversal with respect to said first runway (11.1), and **in that** in some of said second links (14.2) a respective haulage hook (15) is supported, articulated with respect to a pin (15.1), with an axis parallel to the axis (14.23) of the bearer rollers so as to be able to oscillate between a position hanging downwards by gravity, in which it at least partially extends in said second runway (12.1), and a position partially withdrawn in the bulk dimension of the respective link (14.2) when it meets an obstacle along said second runway (12.1).

2. Transporter according to claim 1, **characterised in that** each trolley (16) comprises:
- a front axle, in which at least one idle front wheel (16.1) is mounted on an axis (16.11) that is essentially transversal with respect to said second runway (12.1) and suitable for cooperating with any one of said hooks (15);
- a rear axle, in which at least one rear idle wheel (16.2) is mounted on an axis (16.21) that is essentially transversal with respect to said second runway (12.1) and coated with an essentially parallelepiped block (16.22);
- said wheels (16.1, 16.2) are arranged in rolling contact in said second runway (12.1);
- as well as a longitudinal suspension rod (17) of objects to be transported, connected at its respective longitudinal ends with said front and rear axles through corresponding hanging arms (17.1, 17.2) suspended with respect to the same axles, so that said hanging arms (17.1, 17.2) extend at the bottom through said continuous longitudinal slot (12.2) of the lower wall of said body (10.1) and support the corresponding suspension rod (17) below the same wall.

3. Transporter according to claim 2, **characterised in that** each hanging arm (17.1, 17.2) is connected to the corresponding end of said longitudinal suspension rod (17) with the intermediary of a respective fifth wheel (17.3, 17.4) with its axis parallel to the axis (14.13) of said directional rollers (14.12) of the chain (14), so as to allow the relative trolley (16) to follow the curves of the runway (12.1) in a substantially horizontal plane.

4. Transporter according to claim 1, **characterised in that** it comprises at least one switch (20), which allows either the exit from said second runway (12.1) towards the right and/or towards the left, or the continuation of the journey along the same runway to be selectively determined for each trolley (16), **in that**, upstream of said switch (20), said second runway (12.1) of the linear body (10.1) comprises a respective runway portion (12.3) for the selective channelling of the arriving trolleys (16) either towards an outer path underneath, right (20.1) and/or left (20.2) - so-called "manual conveyor" - or for the possible continuation of the journey along said second runway and **in that** said runway portion (12.3) of the second runway (12.1) is connected in an articulated manner, with its end distal from said manual conveyor (20.1, 20.2), with respect to said linear body (10.1) to oscillate about an essentially horizontal axis (12.4), so as to be able to selectively arrange - oscillating downwards about said axis - the other end thereof substantially at the level of said underlying manual conveyor - work position, in which the trolleys (16) are sent towards said manual conveyor - and so as to be able to selectively return - oscillating towards the other about said axis - in a position in which it joins linearly to said second runway (12.1) of the linear body (10.1) - rest position, in which the trolleys (16) continue along said second runway (12.1).

5. Transporter according to claim 4, **characterised in that** said switch (20) is arranged at the level of said manual conveyor (20.1, 20.2) and has a drawer-type structure (21), in which one or two curvilinear runway portions, right (21,1) / left (21.2) respectively, are arranged substantially to the right and to the left respectively, of the overlying transporter (10) and in the same area as its linear body (10.1), so that in such an area each trolley (16) can go out from said second runway (12.1) both towards the right and towards the left.

6. Transporter according to one of the previous claims 4 or 5, **characterised in that** said drawer-type switch (21) comprises a curvilinear runway portion, with curvature to the right or left, or two contiguous curvilinear runway portions (21.1, 21.2), with curvature to the right and left respectively, and it is selectively mobile in the direction transversal to the runway (12.1/12.3) of the transporter (10) and in the plane of said manual conveyor (20.1, 20.2), so as to selectively arrange said one curvilinear runway portion, or else one or the other of said two curvilinear runway portions (21.1, 21.2), with an end at the second runway (12.1/12.3) and with the other end contiguous to the corresponding manual conveyor (20.1, 20.2), the curvature of each curvilinear portion (21.1, 21.2) of said drawer-type switch (21) being such as to join without solution of continuity, in the plane of said manual conveyor, the end of said second runway (12.1/12.3) distal from said axis (12.4) with the start (21.11, 21.22) of the corresponding manual conveyor (20.1, 20.2), when said runway portion (12.3) of the transporter (10) is oscillated in said work position, so that said drawer-type switch (21) allows the exit from the second runway (12.1) of the trolleys (16) selectively towards the right (manual conveyor 20.1) and/or towards the left (manual conveyor 20.2).

7. Transporter according to one of the previous claims 4, 5, or 6, **characterised in that**, in the exit step from the transporter (10), each trolley (16) crosses the inclined plane formed from said runway portion (12.3) of the second runway (12.1), oscillated in work position about said axis (12.4), allowing its front axle to detach automatically, by moving away, from the relative haulage hook (15) of the chain (14) that has hauled it up to such a position, and along said inclined plane the trolley (16), detached from the hook (15), acquires speed by gravity from its own weight and freely crosses the remaining part of said inclined rectilinear runway portion (12.3), correctly and automatically entering the corresponding manual conveyor (20.1, 20.2) by means of the corresponding curvilinear portion (21.1, 21.2) of the drawer-type switch (21) suitably actuated.

8. Transporter according to one of the previous claims 5, 6 or 7, **characterised in that** each curvilinear portion (21.1, 21.2) of said drawer-type switch (21) is arranged so that it can slide on corresponding rectilinear guides and is selectively actuated into sliding with respect to said guides through translation command means with fluid-dynamic or mechanical control.

9. Transporter according to one of the previous claims 5, 6 or 7, **characterised in that** said runway portion (12.3) of the second runway (12.1) is selectively commanded in oscillation about said axis (12.4), between said rest position and said work position, and vice-versa, through oscillation command means with fluid-dynamic or mechanical control.

10. Transporter according to one of the previous claims 8 or 9, **characterised in that** in said linear body (10.1) corresponding continuous longitudinal ducts (10.2, 12.5) are respectively formed in an integral body to supply pressurized fluid to said translation command means with fluid-dynamic control of said curvilinear portions (21.1, 21.2) of said drawer-type switch (21), and, respectively to said oscillation command means of said runway portion (12.3) of the second runway (12.1).

## Patentansprüche

1. Motorisierter Hängebahntransporter mit Doppelschiene für angehängte leichte Lasten und dergleichen, umfassend eine durchgängige Gliederkette (14) und einen hängenden linearen starren Körper (10.1), in welchem zwei durchgängige längslaufende sich überlappende Hauptausnehmungen, eine obere (11) und eine untere (12), vorgesehen sind, wobei die zwei überlappenden Ausnehmungen durch eine dazwischenliegende Wand (13) getrennt sind, die ihrerseits eine durchgängige längslaufende zentrale Aussparung (13.1) aufweist, durch welche die beiden Ausnehmungen selbst in Verbindung miteinander stehen, und wobei eine untere Wand die unten liegende Ausnehmung (12) nach unten hin begrenzt und eine durchgängige längslaufende Aussparung (12.2) aufweist, so dass in dem Körper (10.1):
- die obere Ausnehmung (11) eine erste Führung darstellt, die einen ersten, an drei Seiten, nämlich nach oben und an den beiden Seiten, im Wesentlichen geschlossenen Laufweg (11.1) für die kontinuierlich umlaufende und Förderhaken (15) tragende durchgängige Gliederkette (14) bildet, wobei die Förderhaken (15) sich normalerweise zumindest teilweise durch die Aussparung (13.1) der Zwischenwand (13) bis unter den ersten Laufweg (11.1) erstrecken;
- die untere Ausnehmung (12) eine zweite Führung darstellt, die einen zweiten, an den beiden Seiten im Wesentlichen und an der Ober- und Unterseite teilweise geschlossenen Laufweg (12.1) bildet, welcher sich unterhalb des ersten Laufwegs (11.1) und gleichgerichtet mit diesem erstreckt und auf welchem die Förderhaken (15) normalerweise zumindest teilweise zur Beförderung von Wagen (16) angeordnet sind, die ihrerseits entlang des zweiten Laufwegs (12.1) gleiten können,
**dadurch gekennzeichnet, dass** die durchgängige Gliederkette (14) abwechselnd erste Glieder (14.1) umfasst, in denen jeweils eine freie Laufrolle (14.12) - bekannt als "direktional" - gelagert ist, deren Achse (14.13) in einer im Wesentlichen in der Mitte liegenden vertikalen Längsebene bezüglich des ersten Laufwegs (11.1) liegt, und zweite Glieder (14.2) umfasst, in denen jeweils zwei freie Laufrollen (14.22) - bekannt als "Träger" - gelagert sind, die hinsichtlich einer gemeinsamen Achse (14.23) im Wesentlichen quer zu dem ersten Laufweg (11.1) montiert sind, und dass in einigen der zweiten Glieder (14.2) jeweils ein Förderhaken (15) mit Hilfe eines Stifts (15.1) gelenkig gehaltert ist, wobei die Achse des Stifts parallel zur Achse (14.23) der Tragrollen liegt, so dass der Förderhaken hin und her schwingen kann zwischen einer durch die Schwerkraft bewirkten herabhängenden Position, in welcher der Förderhaken zumindest teilweise bis in den zweiten Laufweg (12.1) hineinreicht, und einer Position, in der er teilweise in die Hauptabmessung des jeweiligen Gliedes (14.2) zurückgezogen ist, wenn er entlang des zweiten Laufwegs (12.1) auf ein Hindernis stößt.

2. Transporter nach Anspruch 1, **dadurch gekennzeichnet, dass** jeder Wagen (16) umfasst:
- eine Vorderachse, bei der mindestens ein freies Vorderrad (16.1) auf einer im Wesentlichen quer zum zweiten Laufweg (12.1) verlaufenden Achse (16.11) montiert ist, welches geeignet ist für ein Zusammenwirken mit einem der Haken (15);
- eine Hinterachse, bei der mindestens ein freies Hinterrad (16.2) auf einer im Wesentlichen quer zum zweiten Laufweg (12.1) verlaufenden Achse (16.21) montiert ist und mit einem im Wesentlichen die Form eines Parallelepipeds aufweisenden Block (16.22) umkleidet ist;
- die Räder (16,1, 16,2) sind derart angeordnet, dass sie in Rollkontakt mit dem zweiten Laufweg (12.1) stehen;
- sowie eine längslaufende Aufhängungsstange (17) für die zu transportierenden Objekte, die an ihren jeweiligen Längsenden mit der Vorder- bzw. Hinterachse mit Hilfe entsprechender Aufhängungsarme (17.1, 17.2) verbunden ist, wobei letztere in die besagten Achsen eingehängt sind, so dass die Aufhängungsarme (17.1, 17.2) sich unten durch die durchgängige längslaufende Aussparung (12.2) der unteren Wand des Körpers (10.1) hindurch erstrecken und die zugehörige Aufhängungsstange (17) unterhalb dieser Wand tragen.

3. Transporter nach Anspruch 2, **dadurch gekennzeichnet, dass** jeder Aufhängungsarm (17.1, 17.2) an dem entsprechenden Ende der längslaufenden Aufhängungsstange (17) mit Hilfe eines jeweiligen fünften Rades (17.3, 17.4) verbunden ist, dessen Achse parallel zu der Achse (14.13) der direktionalen Laufrollen (14,12) der Kette (14) verläuft, so dass der jeweilige Wagen (16) den Bahnkrümmungen des Laufwegs (12.1) in einer im Wesentlichen horizontalen Ebene folgen kann.

4. Transporter nach Anspruch 1, **dadurch gekennzeichnet, dass** er mindestens einen Schalter (20) umfasst, der für jeden Wagen (16) wahlweise entweder den Austritt aus dem zweiten Laufweg (12.1) nach rechts und/oder nach links oder die Fortsetzung der Fahrt entlang desselben Laufwegs festzulegen ermöglicht, wobei der zweite Laufweg (12.1) des linearen Körpers (10.1) dem Schalter (20) vorgelagert einen jeweiligen Laufwegabschnitt (12.3) für die wahlweise Kanalisierung der ankommenden Wagen (16) entweder in Richtung einer unterhalb liegenden äußeren Bahn, rechts (20.1) und/oder links (20.2) - der sogenannte "manuelle Förderer" - oder zur möglichen Fortsetzung der Fahrt entlang des zweiten Laufwegs umfasst und dass der Laufwegabschnitt (12.3) des zweiten Laufwegs (12.1) an seinem dem manuellen Förderer (20.1, 20.2) abgewandten Ende gelenkig mit dem linearen Körper (10.1) verbunden ist, so dass er um eine im Wesentlichen horizontale Achse (12.4) schwingen kann und so in der Lage ist, wahlweise sein anderes Ende - bei einer Schwingung um besagte Achse nach unten - im Wesentlichen auf die gleiche Höhe des darunterliegenden manuellen Förderers zu bringen - eine Arbeitsstellung, in der die Wagen (16) in Richtung des manuellen Förderers befördert werden - und auch wahlweise - bei einer Schwingung in die entgegengesetzte Richtung um besagte Achse - wieder in eine Position zurückzukehren, in der er geradlinig an den zweiten Laufweg (12.1) des linearen Körpers (10.1) anschließt - eine Ruhestellung, in der die Wagen (16) sich weiter entlang des zweiten Laufwegs (12.1) bewegen.

5. Transporter nach Anspruch 4, **dadurch gekennzeichnet, dass** der Schalter (20) auf Höhe des manuellen Förderers (20.1, 20.2) angeordnet ist und eine schubfachartige Struktur (21) hat, in welcher ein oder zwei gekrümmte Laufwegabschnitte, ein rechter (21.1) bzw. ein linker (21.2), im Wesentlichen rechts bzw. links von dem darüberliegenden Transporter (10) und im Bereich von dessen linearem Körper (10.1) angeordnet sind, so dass jeder Wagen (16) in einem solchen Bereich den zweiten Laufweg (12.1) sowohl nach rechts als auch nach links verlassen kann.

6. Transporter nach einem der Ansprüche 4 oder 5, **dadurch gekennzeichnet, dass** der schubfachartige Schalter (21) einen gekrümmten Laufwegabschnitt mit Rechts- bzw. Linkskrümmung oder zwei nebeneinander liegende gekrümmte Laufwegabschnitte (21.1, 21.2) mit Rechts- bzw. Linkskrümmung umfasst und wahlweise in einer Richtung quer zum Laufweg (12.1/12.3) des Transporters (10) sowie in der Ebene des manuellen Förderers (20.1, 20.2) beweglich ist, so dass wahlweise der eine gekrümmte Laufwegabschnitt oder andernfalls einer der beiden gekrümmten Laufwegabschnitte (21.1, 21.2) mit einem Ende an dem zweiten Laufweg (12.1/12.3) und mit dem anderen Ende an den zugehörigen manuellen Förderer (20.1, 20.2) angrenzend angeordnet wird, wobei die Krümmung eines jeden gekrümmten Abschnitts (21.1, 21.2) des schubfachartigen Schalters (21) so beschaffen ist, dass das der Achse (12.4) abgewandte Ende des zweiten Laufwegs (12.1/12.3) in der Ebene des manuellen Förderers stetig an den Anfang (21.11, 21.22) des zugehörigen manuellen Förderers (20.1, 20.2) anschließt, wenn der Laufwegabschnitt (12.3) des Transporters (10) in besagte Arbeitsstellung schwingt, so dass der schubfachartige Schalter (21) den Austritt der Wagen (16) aus dem zweiten Laufweg (12.1) wahlweise nach rechts (manueller Förderer 20.1) und/oder nach links (manueller Förderer 20.2) ermöglicht.

7. Transporter nach einem der vorangehenden Ansprüche 4, 5 oder 6, **dadurch gekennzeichnet, dass** jeder Wagen (16) beim Austrittsschritt aus dem Transporter (10) die durch den um die Achse (12.4) in die Arbeitsstellung geschwenkten Laufwegabschnitt (12.3) des zweiten Laufwegs (12.1) gebildete geneigte Ebene durchfährt, wobei die Vorderachse sich durch Wegziehen automatisch von dem jeweiligen Förderhaken (15) der Kette (14), der den Wagen in diese Position befördert hat, lösen kann, woraufhin der von dem Haken (15) gelöste Wagen (16) entlang der geneigten Ebene aufgrund der Hangabtriebskraft beschleunigt wird und den verbleibenden geradlinigen Abschnitt des geneigten Laufwegabschnitt (12.3) frei durchfährt, um dann ordnungsgemäß und automatisch über den jeweiligen gekrümmten Abschnitt (21.1, 21.2) des entsprechend angesteuerten schubfachartigen Schalters (21) in den zugehörigen manuellen Förderer (20.1, 20.2) einzutreten.

8. Transporter nach einem der vorangehenden Ansprüche 5, 6 oder 7, **dadurch gekennzeichnet, dass** jeder gekrümmte Abschnitt (21.1, 21.2) des schubfachartigen Schalters (21) derart angeordnet ist, dass er in zugehörigen geradlinigen Führungen gleiten kann und dass das Gleiten in den Führungen über Translations-Steuerungsmittel mit strömungsdynamischer oder mechanischer Kontrolle wahlweise angesteuert werden kann.

9. Transporter nach einem der vorangehenden Ansprüche 5, 6 oder 7, **dadurch gekennzeichnet, dass** der Laufwegabschnitt (12.3) des zweiten Laufwegs (12.1) mit Hilfe von Schwingungs-Steuerungsmifteln mit strömungsdynamischer oder mechanischer Kontrolle um die Achse (12.4) wahlweise in eine Schwingung zwischen der Ruhestellung und der Arbeitsstellung und umgekehrt versetzt wird.

10. Transporter nach einem der vorangehenden Ansprüche 8 oder 9, **dadurch gekennzeichnet, dass** in dem linearen Körper (10.1) jeweils entsprechende durchgängige, längslaufende Kanäle (10.2, 12.5) als integrale Körper ausgebildet sind, um den Translations-Steuerungsmitteln mit strömungsdynamischer Kontrolle der gekrümmten Abschnitte (21.1, 21.2) des schubfachartigen Schalters (21) bzw. den Schwingungs-Steuerungsmitteln des Laufwegabschnitts (12.3) des zweiten Laufwegs (12.1) ein unter Druck stehendes Fluid zuzuführen.

## Revendications

1. Transporteur aérien motorisé à rail double pour des charges faibles suspendues et similaires, comprenant une chaîne à vérin continue (14) et un corps rigide linéaire suspendu (10.1), dans lequel deux cavités longitudinales continues superposées principales, supérieure (11) et inférieure (12), sont dans lequel une paroi intermédiaire (12) sépare lesdites deux cavités superposées et a une fente centrale longitudinale continue (13.1) par l'intermédiaire de laquelle les cavités elles-mêmes sont agencées en communication, et une paroi inférieure définit la cavité sous-jacente (12) en bas et a une fente longitudinale continue (12.2) de sorte que dans ledit corps (10.1) :
- ladite cavité supérieure (11) fournit un premier guide, formant un premier chemin de roulement (11.1) avec son chemin sensiblement fermé sur les trois côtés, en haut et sur les côtés, pour la chaîne à vérin continue (14), circulant continûment et portant des crochets de traction (15), s'étendant normalement au moins partiellement sous ledit premier chemin de roulement (11.1) à travers ladite fente (13.1) de la paroi intermédiaire (13) ;
- ladite cavité inférieure (12) fournit un second guide, formant un second chemin de roulement (12.1) avec son chemin sensiblement fermé sur ses deux côtés et partiellement sur le côté supérieur et sur le côté inférieur, qui s'étend sous ledit premier chemin de roulement (11.1) et après celui-ci et dans lequel lesdits crochets de traction (15) sont normalement au moins partiellement agencés pour tracter des chariots (16), capables de coulisser le long dudit second chemin de roulement (12.1), **caractérisé en ce que**
- ladite chaîne à vérin (14) comprend de premières liaisons en alternance (14.1), dans chacune desquelles un rouleau fou (14.12) connu comme « directionnel » est supporté avec son axe (14.13) contenu dans un plan longitudinal vertical sensiblement médian par rapport audit premier chemin de roulement, (11.1), et de secondes liaisons (14.2) dans chacune desquelles deux rouleaux fous (14.22) - connus comme « porteurs » - sont respectivement supportés, montés par rapport à un axe commun (14.23) essentiellement transversalement par rapport audit premier chemin de roulement (11.1), et **en ce que** dans certaines desdites secondes liaisons (14.2) un crochet de traction respectif (15) est supporté, articulé par rapport à un pivot (15.1), avec un axe parallèle à l'axe (14.23) des rouleaux porteurs de façon à pouvoir osciller entre une position de suspension vers le bas par gravité, dans laquelle il s' étend au moins partiellement dans ledit second chemin de roulement (12.1), et une position partiellement en retrait dans la dimension globale de la liaison respective (14.2) quand il rencontre un obstacle le long dudit second chemin de roulement (12.1).

2. Transporteur selon la revendication 1, **caractérisé en ce que** chaque chariot (16) comprend,
- un essieu avant, dans lequel au moins une roue avant folle (16.1) est montée sur un axe (16.11) qui est essentiellement transversal par rapport audit second chemin de roulement (12.1) et adaptée pour coopérer avec n'importe lequel desdits crochets (15) ;
- un essieu arrière, dans lequel au moins une roue folle arrière (16.2) est montée sur un axe (16.21) qui est essentiellement transversal par rapport audit second chemin de roulement (12.1) et revêtue d'un bloc essentiellement parallélépipédique (16.22);
- lesdites roues (16-1, 16.2) sont agencées en contact de roulement dans ledit second chemin de roulement (12.1) ;
- ainsi qu'une tige de suspension longitudinale (17) d'objets à transporter, reliée à ses extrémités longitudinales respectives avec lesdits essieux avant et arrière par l'intermédiaire de bras de suspension correspondants (17.1), 17.2) suspendus par rapport aux même essieux, de sorte que lesdits bras de suspension (17.1, 17.2) s'étendent en bas à travers ladite fente longitudinale continue (12.2) de la paroi inférieure dudit corps (10.1) et supportent la tige de suspension correspondante (17) en dessous de la même paroi.

3. Transporteur selon la revendication 2, **caractérisé en ce que** chaque bras de suspension (17.1, 17.2) est relié à l'extrémité correspondante de ladite tige de suspension longitudinale (17) par l'intermédiaire d'une cinquième roue respective (17.3, 17.4) avec son axe parallèle à l'axe (19. 13) desdits rouleaux directionnels (14.12) de la chaîne (14), de façon à permettre au chariot relatif (16) de suivre les courbes du chemin de roulement (12.1) dans un plan sensiblement horizontal.

4. Transporteur selon la revendication 1, **caractérisé en ce qu'**il comprend au moins un commutateur (20), qui permet soit la sortie dudit second chemin de roulement (12.1) vers 1a droite et/ou vers la gauche, ou la poursuite du parcours le long du même chemin de roulement à déterminer sélectivement pour chaque chariot (16), et **en ce que**, en amont dudit commutateur (20), ledit second chemin de roulement (12.1) du corps linéaire (10-1) comprend une portion de chemin de roulement respective (12.3) pour la canalisation sélective des chariots arrivant (16) soit vers un chemin extérieur situé en dessous, à droite (20-1) et/ou à gauche (20.2) appelé « convoyeur manuel » - ou pour la poursuite possible du parcours le long dudit second chemin de roulement et **en ce que** ladite seconde portion de chemin de roulement (12.3) du second chemin de roulement (12.1) est reliée de manière articulée, avec son extrémité distale dudit convoyeur manuel (20.1, 20.2), par rapport audit corps linéaire (10.1) pour osciller autour d'un axe essentiellement horizontal (12.4), de façon à être capable d'agencer sélectivement - en oscillant vers le bas autour dudit axe - l'autre extrémité de celle-ci sensiblement au niveau dudit convoyeur manuel sous-jacent - position de travail, dans laquelle les chariots (16) sont envoyés vers ledit convoyeur manuel - et de façon à être capable de retourner sélectivement - en oscillant dans l'autre sens autour dudit axe - dans une position dans laquelle elle rejoint linéairement ledit second chemin de roulement (12,1) du corps linéaire (10.1) - position de repos, dans laquelle les chariots (16) continuent le long dudit second chemin de roulement (12.1).

5. Transporteur selon la revendication 4, **caractérisé en ce que** ledit commutateur (20) est agencé au niveau dudit convoyeur manuel (20.1, 20.2) et a une structure de type à tiroir (21), dans laquelle une ou deux portions de chemin de roulement curvilignes, droite (21.1)/ gauche (21.2) respectivement, sont agencées sensiblement à droite et à gauche respectivement, du transporteur en surplomb (10) et dans la même zone que son corps linéaire (10.1), de sorte que dans une telle zone chaque chariot (16) peut sortir dudit second chemin de roulement (12.1) à la fois vers la droite et vers la gauche.

6. Transporteur selon l'une des revendications précédentes 4 ou 5, **caractérisé en ce que** ledit commutateur de type à tiroir (21) comprend une portion de chemin de roulement curviligne, avec une courbure à droite ou à gauche, ou deux portions de chemin de roulement curvilignes contiguës (21.1, 21.2), avec une courbure à droite et à gauche respectivement, et il est sélectivement mobile dans la direction transversale au chemin de roulement (12.1/12.3) du transporteur (10) et dans le plan dudit convoyeur manuel (20.1, 20.2), de façon à agencer sélectivement ladite portion de chemin de roulement curviligne, ou l'une ou l'autre desdites deux portions de chemin de roulement curvilignes (21.1, 21.2), avec une extrémité au second chemin de roulement (12.1/12.3) et avec l'autre extrémité contiguë vers le convoyeur manuel correspondant (20.1, 20.2), la courbure de chaque portion curviligne (21.1, 21.2) dudit commutateur de type à tiroir (21) étant telle qu'elle rejoigne sans solution de continuité, dans le plan dudit convoyeur manuel, l'extrémité dudit second chemin de roulement (12.1/12.3) distale par rapport audit axe (12.4) avec le début (21.11, 21.22) du convoyeur manuel correspondant (20.1, 20.2), quand ladite portion de chemin de roulement (12.3) du transporteur (10) oscille dans ladite position de travail, de sorte que ledit commutateur de type à tiroir (21) permette la sortie dudit second chemin de roulement (12.1) des chariots (16) sélectivement vers la droite (convoyeur manuel 20.1) et/ou vers la gauche (convoyeur manuel 20.2).

7. Transporteur selon l'une quelconque des revendications précédentes 4, 5 ou 6, **caractérisé en ce que** dans la phase de sortie du transporteur (10), chaque chariot (16) franchit le plan incliné formé de ladite portion de chemin de roulement (12.3) du second chemin de roulement (12.1), oscillant dans la position de travail autour dudit axe (12.4), permettant à son essieu avant de se détacher automatiquement, en s'éloignant, à partir du crochet de traction correspondant (15) de la chaîne (14) qui l'a tracté dans une telle position, et le long dudit plan incliné le chariot (16), détaché dudit crochet (15), acquiert de la vitesse par gravité par son propre poids et franchit librement la partie restante de ladite portion de chemin de roulement rectiligne inclinée (12.3), entrant correctement et automatiquement dans le convoyeur manuel correspondant (20.1, 20.2) au moyen de la portion curviligne correspondante (21.1, 21.2) du commutateur de type à tiroir (21) convenablement actionné.

8. Transporteur selon l'une des revendications précédentes 5, 6 ou 7, **caractérisé en ce que** chaque portion curviligne (21.1, 21.2) dudit commutateur de type à tiroir (21) est disposée de sorte qu'elle puisse coulisser sur les guides rectilignes correspondants et soit sélectivement actionnée en coulissement par rapport auxdits guides par l'intermédiaire de moyens de commande de translation avec un contrôle à dynamique de fluide ou mécanique.

9. Transporteur selon l'une quelconque des revendications précédentes 5, 6 ou 7, **caractérisé en ce que** ladite portion de chemin de roulement (12.3) du second chemin de roulement (12.1) est sélectivement commandé en oscillation autour dudit axe (12.4), entre ladite position de repos et ladite position de travail, et vice-versa, par l'intermédiaire de moyens de commande d'oscillation avec un contrôle à dynamique de fluide ou mécanique.

10. Transporteur selon l'une des revendications précédentes 8 ou 9, **caractérisé en ce que** dans ledit corps linéaire (10.1) des conduits longitudinaux continus correspondants (10.2, 12.5) sont respectivement formés en un seul corps pour fournir du fluide pressurisé auxdits moyens de commande de translation avec un contrôle à dynamique de fluide desdits portions curvilignes (21.1, 21.2) dudit commutateur de type à tiroir (21), et, respectivement auxdits moyens de commande d'oscillation de ladite portion de chemin de roulement (12.3) du second chemin de roulement (12.1) .
